# EUROPEAN PATENT APPLICATION

(11) **EP 2 444 330 A2**
(43) Date of publication of application: **25.04.2012**
(21) Application number: 10789659.9
(22) Date of filing: 09.06.2010
(51) Int. Cl.: B65D 33/30, B65D 33/16, F16B 2/22

(54) **CLIP**

(30) Priority: 15.06.2009 KR 20090007680 U
(71) Applicant: Kim, Sung Hyun, Seongdong-gu, Seoul 133-768 (KR)
(72) Inventor: Kim, Sung Hyun, Seongdong-gu, Seoul 133-768 (KR)
(74) Representative: Manitz, Finsterwald & Partner GbR
(86) International application number: PCT/KR2010/003701
(87) International publication number: WO 2010/147332

(57) **Abstract**

The present invention relates to a clip, and more particularly, to a clip used to temporarily bind the upper binding portion of a plastic bag for containing foods, such as bread. The clip includes a pair of wing portions configured to comprise a guide portion, including a pair of guide members disposed in opposite directions and configured to guide an upper binding portion of a plastic bag to a middle portion between the guide members, and a reception portion, including a pair of extension members coupled to the respective backs of the guide members and configured to receive the guided upper binding portion of the plastic bag, and a support portion settled in a portion at which the pair of extension members meets. The pair of wing portions is greater in width than in thickness and operates to widen or narrow in opposite directions without being twisted. Each of the guide members has a brim of a soft arc shape and has a width gradually narrowed from the brim to the middle portion.

## Description

### [Technical Field]

The present invention relates to a clip, and more particularly, to a clip used to temporarily bind the upper binding portion of a plastic bag for containing foods, such as bread.

### [Background Art]

In general, a plastic bag is used as means for containing or packaging various kinds of foods, such as bread or cereals. An upper portion of the plastic bag is chiefly opened and opened/shut by an additional clip.

That is, if it is sought to store the contents received in the plastic bag or the contents are left over without being consumed, the upper portion of the plastic bag is bound in order to prevent moisture within foods, such as bread, from being evaporated. A flat type clip made of plastic is used to bind the upper portion of the plastic bag.

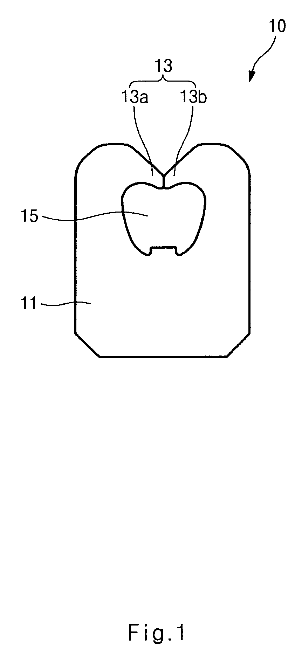

FIG. 1 is a diagram showing a conventional flat type clip.

As shown in, the conventional clip 10 is formed of a thin and flat member made of plastic material. An opening and shutting portion 13 in which the upper portion of a plastic bag is put is formed in conventional clip 10. The opening and shutting portion 13 includes two opening and shutting members 13a and 13b. The opening and shutting members 13a and 13b are cross each other and turned aside, thus forming an entrance. The plastic bag inserted through the entrance of the opening and shutting portion 13 is received in a through hole 15 formed in the rear of the opening and shutting portion 13.

If the conventional flat type clip 10 constructed as described above is repeatedly used, permanent deformation, such as that the opening and shutting members 13a and 13b of a thin thickness are bent, is generated because the opening and shutting portion 13 in front of the clip is formed of a thin flat member. Accordingly, the clip 10 becomes useless. Furthermore, the conventional flat type clip 10 is problematic in that it is inconvenient to use because the plastic bag cannot be easily inserted into or drawn out from the through hole of the clip in terms of the structure. Furthermore, the conventional clip has very poor beauty.

### [Disclosure]

### [Technical Problem]

Accordingly, the present invention has been made in view of the above problems, and it is an object of the present invention to provide a clip which enables the upper binding portion of a plastic bag to be inserted into or drawn out from the inside of the clip easily and rapidly, does not break down for a long term, and can improve a fine view in appearance.

### [Technical Solution]

To achieve the above object, the clip of the present invention includes a pair of wing portions configured to include a guide portion, including a pair of guide members disposed in opposite directions and configured to guide an upper binding portion of a plastic bag to a middle portion between the guide members, and a reception portion, including a pair of extension members coupled to the respective backs of the guide members and configured to receive the guided upper binding portion of the plastic bag; and a support portion settled in a portion at which the pair of extension members meets. The pair of wing portions is greater in width than in thickness and operates to widen or narrow in opposite directions without being twisted, and each of the guide members has a brim of a soft arc shape and has a width gradually narrowed from the brim to the middle portion.

The support portion of the present invention has a disk form backward exposed.

The pair of opposite guide members of the present invention is inclined inwardly and configured to have a gap therebetween gradually narrowed from the front to the back.

A reception space portion between the pair of extension members is formed bigger than a front end space portion between the pair of guide members.

Here, the upper binding portion of the plastic bag preferably is arranged at the front end space portion along the pair of guide members, pushed backward, and then put in the reception space portion.

Meanwhile, it is preferred that the upper binding portion of the plastic bag put in the reception space portion be rolled on the basis of any one of the pair of extension members and then inserted into the reception space portion through the front end space portion, thereby preventing air from flowing into the plastic bag.

Furthermore, the back side of the support portion, externally exposed, has a curved surface for a feeling of contact when the support portion is grasped.

It is preferred that the clip further include reinforcement ribs formed between the support portion and the pair of extension members.

### [Advantageous Effects]

The clip of the present invention can be easily grasped by the hand and can be easily used. Accordingly, the binding portion of a plastic bag can be bound simply and rapidly. Furthermore, the clip of the present invention can be used for a long term because the clip is not broken down even after it is repeatedly used. Furthermore, the clip of the present invention has an effect in that it makes remarkable a fine view in appearance because the clip generally has a cute shape like the ear of a rabbit.

### [Description of Drawings]

FIG. 1 is a diagram showing a conventional flat type clip;
FIG. 2 is a perspective view of a clip according to the present invention;
FIGS. 3 to 5 are detailed diagram showing the major elements of the clip of FIG. 2; and
FIGS. 6 to 10 are perspective views showing the use of the clip of the present invention.

### [Best Mode]

The present invention will be described in detail below with reference to the accompanying drawings.

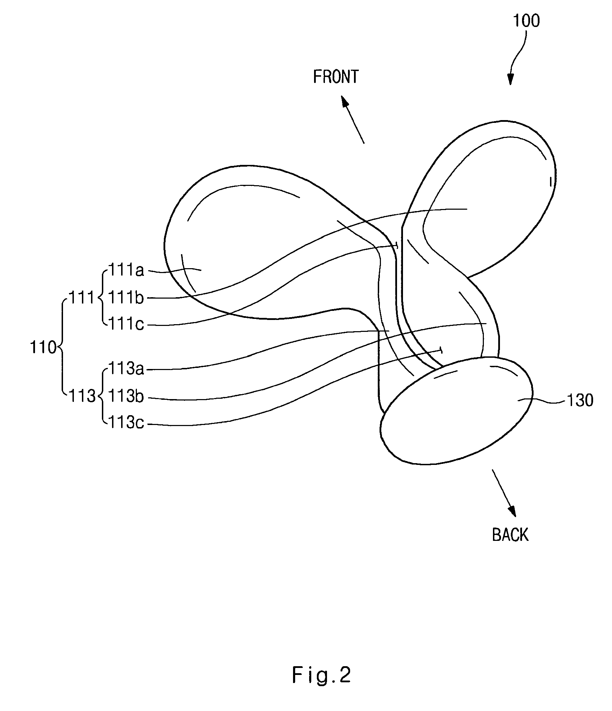

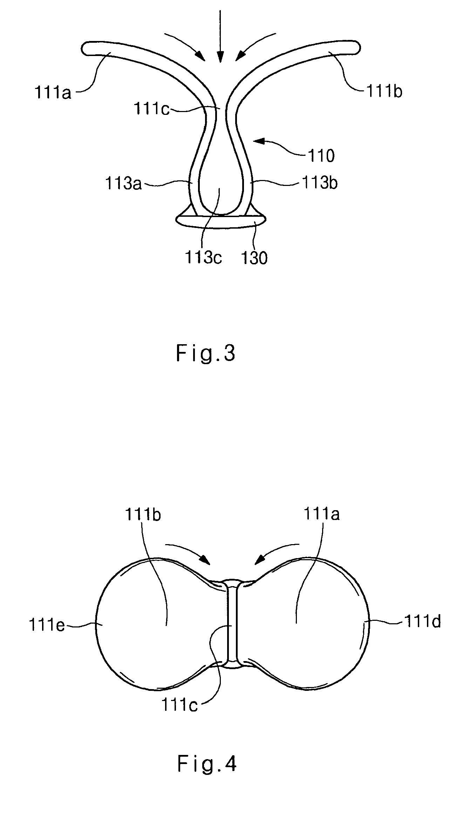

FIG. 2 is a perspective view of a clip according to the present invention, and FIGS. 3 to 5 are detailed diagram showing the major elements of the clip of FIG. 2.

Referring to the drawings, the clip 100 according to the present invention includes a pair of wing portions 110 placed at the front end and a support portion 130 coupled to the back of the pair of wing portions 110. The wing portions 110 and the support portion 130 are integrally formed. The wing portions 110 generally have a shape like the ear of a rabbit, having a width greater than a thickness.

The pair of wing portions 110 is operated to widen or narrow in opposite directions, and they provide guide to a plastic bag so that the plastic bag is smoothly and naturally arranged at the insertion space in the middle of the wing portions 110. For this purpose, the pair of wing portions 110 includes a guide portion 111 disposed in opposite directions and a reception portion 113 backward coupled to the guide portion 111 and configured to receive the plastic bag.

The guide portion 111 includes two opposite guide members 111a and 111b which are curved and slanted. The guide members 111a and 111b are gradually narrowed from the front to the back on the basis of FIG. 3, thus forming a front end space portion 111c. The front end space portion 111c has the narrowest gap between the guide members 111a and 111b. In an alternative embodiment, the two guide members may be configured to meet at a portion having the narrowest gap without the front end space portion 111c according to circumstances. It is, however, preferred that the front end space portion 111c of a specific size be included in order to have a soft plastic bag inserted therein.

When the upper binding portion of a plastic bag is pushed from the front to the back of the clip 100, the plastic bag is naturally guided into the middle portion of the clip by means of the guide portion 111. Here, as shown in FIG. 3, the guide portion 111 is configured to have the opposite guide members 111a and 111b widened on both sides on the basis of the middle portion, so that the plastic bag can be smoothly guided into the middle portion (i.e., an arrow direction).

Furthermore, as shown in FIG. 4, when seen from the front of the clip, the guide portion 111 has the brims 111d and 111e of the guide members 111a and 111b formed in a soft arc shape. The width of the guide portion 111 is gradually narrowed from the brims 111d and 111e to the center of the guide portion 111, so that the plastic bag is guided in an arrow direction so that it is naturally moved to the center of the guide portion 111.

The reception portion 113 of the present invention includes two extension members 113a and 113b integrally extended from the respective guide members 111a and 111b of the guide portion 111 via the front end space portion 111c. The two extension members 113a and 113b form a curved surface of an outward streamline form and then meet in the rear, thus forming a curved surface. A reception space portion 113c for receiving a plastic bag is formed between the two extension members 113a and 113b. The reception space portion 113c is formed bigger than the front end space portion 111c of the guide portion 111.

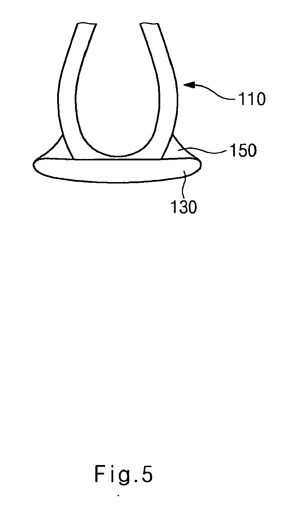

Meanwhile, the support portion 130 is coupled to the wing portions 110 of the present invention and configured to maintain tensile strength at the portion where the two extension members 113a and 113b meet, while forming the curved surface, or to facilitate a grasp. To this end, as shown in FIG. 5, reinforcement ribs 150 may be further formed to have respective curved surfaces in order to reinforce the strength of a portion in which the wing portions 110 are coupled to the support portion 130. This construction increases sealing force by strengthening the inward restoring force of the pair of wing portions 110 and also supplements durability so that the clip is not broken down even after repetitive use.

The support portion 130 of the present invention has a disk form backward exposed. A back side of the support portion 130 is externally exposed and is formed to have a smooth surface slightly curved in order to give a feeling of contact when the support portion 130 is grasped.

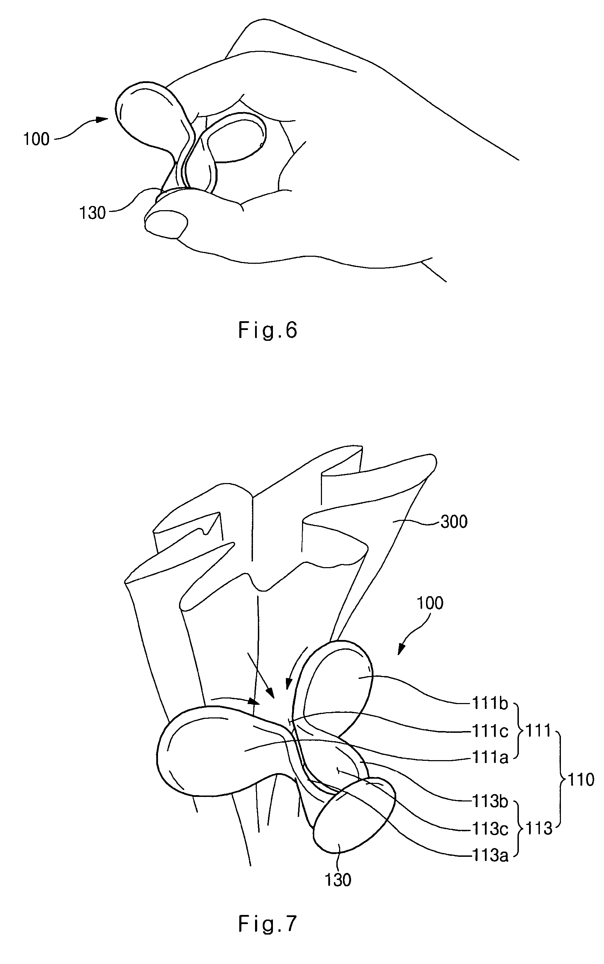

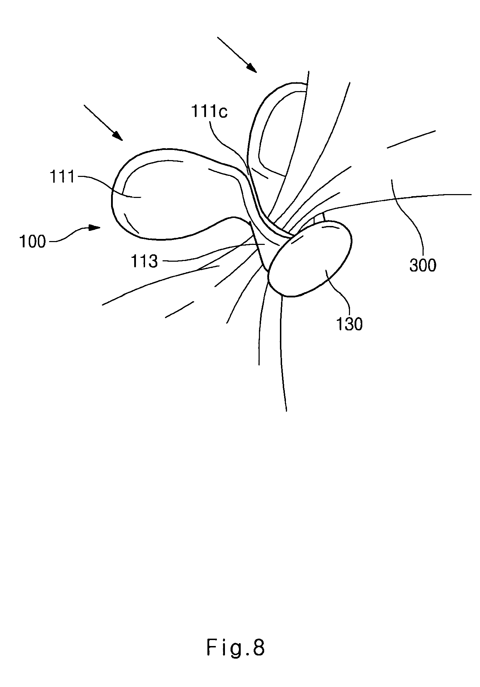

Here, the support portion 130 functions to reinforce the entire strength of the clip and also to enable the clip to be easily grasped. Furthermore, when a user pushes the clip 100 forward with the thumb touching the support portion 130 in order to put the upper binding portion of a plastic bag in the reception space portion 113c of the wing portions 110 as shown in FIGS. 7 and 8, the support portion 130 prevents the wing portions 110 from being inclined from side to side and supports the wing portions 110 so that the clip 100 does not slide or turn. Consequently, the support portion 130 functions to have the clip 100 settled in the plastic bag in a direction in which force is applied by a user.

The use of the clip of the present invention is described below.

FIGS. 6 to 10 are perspective views showing the use of the clip of the present invention. FIG. 6 is a diagram showing a state in which the clip of the present invention is grasped by the hand, and FIGS. 7 and 8 are diagrams showing a process of the clip of the present invention being settled in a plastic bag.

Referring to FIG. 6, the clip 100 of the present invention is grasped by fingers and then moved to a specific position of a plastic bag in which the clip will be settled. At this time, the support portion 130 of the clip 100 is supported by the thumb, and the guide portion 111 of the wing portions 110 is grasped by an index finger or another finger.

Referring to FIG. 7, an upper portion of a plastic bag 300 is neatly arranged and then pushed toward the guide portion 111 in front of the clip 100. Here, the upper scattered binding portion of the plastic bag 300 is moved along the slant face (i.e., an arrow direction) of the guide portion 111 of the wing portions 110. The moved plastic bag 300 is arranged at the front end space portion 111c in the middle of the guide portion 111. Here, it is preferred that the support portion 130 of the clip 100 be supported by the thumb.

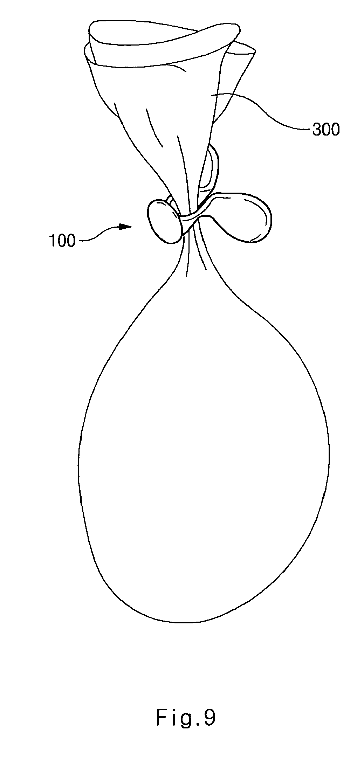

Referring to FIGS. 8 and 9, the upper binding portion of the plastic bag 300, arranged at the front end space portion 111c of the clip 100 of the present invention, continues to be pushed backward. At this time, the compressed upper binding portion of the plastic bag 100 passes through the front end space portion 111c of the guide portion 111, having a relatively narrow width, and it is then put in the reception space portion 113c formed in the rear. Here, since the front end space portion 111c has a relatively very smaller size than the reception space portion 113c, the upper binding portion of the plastic bag 300 put in the reception space portion 113c is not forwardly drawn out from the reception space portion 113c.

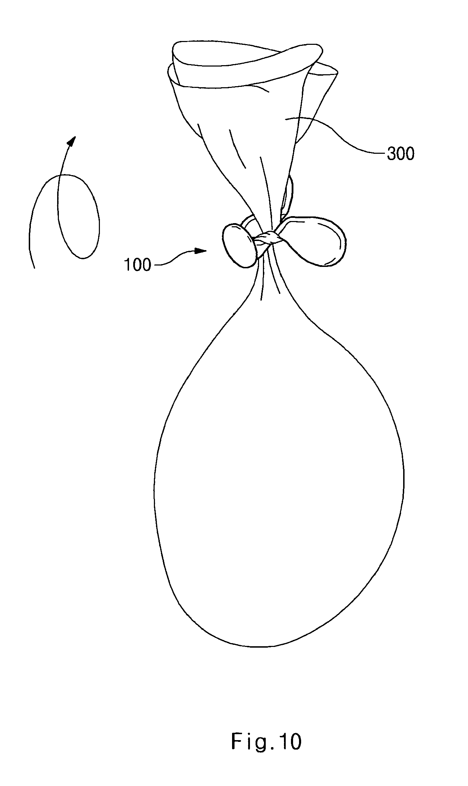

Meanwhile, in order to fully preclude air from flowing into the plastic bag 300, as shown in FIG. 10, the upper binding portion of the plastic bag 300 has only to be rolled once on the basis of one of the extension members 113a and 113b in the state of FIG. 9 and then inserted in the reception space portion 113c through the front end space portion 111c (refer to an arrow direction).

As described above, in the clip 100 of the present invention, the upper binding portion of the plastic bag 300 can be easily put in the reception space portion 113c of the clip 100 by pushing the upper binding portion of the plastic bag 300 toward the wing portions 110 while pressing the support portion 130 using the thumb. Accordingly, the clip 100 can be used simply and rapidly. Furthermore, the clip 100 of the present invention can be used for a long term because it does not break down even after repetitive use and provides a graceful beauty because it has a cute shape like the ear of a rabbit.

## Claims

1. A clip, comprising:
a pair of wing portions configured to comprise a guide portion, including a pair of guide members disposed in opposite directions and configured to guide an upper binding portion of a plastic bag to a middle portion between the guide members, and a reception portion, including a pair of extension members coupled to respective backs of the guide members and configured to receive the guided upper binding portion of the plastic bag; and
a support portion settled in a portion at which the pair of extension members meets,
wherein the pair of wing portions is greater in width than in thickness and operates to widen or narrow in opposite directions without being twisted, and
each of the guide members has a brim of a soft arc shape and has a width gradually narrowed from the brim to the middle portion.

2. The clip of claim 1, wherein the support portion has a disk form backward exposed.

3. The clip of claim 1 or 2, wherein the pair of opposite guide members is inclined inwardly and configured to have a gap therebetween gradually narrowed from a front to a back.

4. The clip of claim 1, wherein a reception space portion between the pair of extension members is formed bigger than a front end space portion between the pair of guide members.

5. The clip of claim 4, wherein the upper binding portion of the plastic bag is arranged at the front end space portion along the pair of guide members, pushed backward, and then put in the reception space portion.

6. The clip of claim 5, wherein the upper binding portion of the plastic bag put in the reception space portion is rolled based on any one of the pair of extension members and then inserted into the reception space portion through the front end space portion, thereby preventing air from flowing into the plastic bag.

7. The clip of claim 1 or 2, wherein a back side of the support portion, externally exposed, has a curved surface for a feeling of contact when the support portion is grasped.

8. The clip of claim 1 or 2, further comprising reinforcement ribs formed between the support portion and the pair of extension members.
